# EUROPEAN PATENT APPLICATION

(11) **EP 4 804 576 A1**
(43) Date of publication of application: **09.09.2026**
(21) Application number: 26163027.1
(22) Date of filing: 06.03.2026
(51) Int. Cl.: H04W 4/70, H04L 9/40, H04W 12/03, H04W 12/041, H04W 12/069

(54) **SYSTEMS AND METHODS FOR SECURE PROVISIONING OF IOT DEVICES**

(30) Priority: 07.03.2025 US 202563768651 P
(71) Applicant: Haila Technologies Inc., Montreal, QC H4C 2K1 (CA)
(72) Inventor: Tchokobou, Guy-Armand Kamendje, Montreal, H4C 2K1 (CA); Allard, Veronique, Montreal, H4C 2K1 (CA); Bower, Patricia, Montreal, H4C 2K1 (CA); Costa, Nelson, Montreal, H4C 2K1 (CA); Kezys, Vytas, Montreal, H4C 2K1 (CA); Nishat, Muhammad Kamran, Montreal, H4C 2K1 (CA)
(74) Representative: Greaves Brewster LLP

(57) **Abstract**

There is provided herein a method and a system for secure provisioning of an Internet of Things (IoT) device. The method includes: receiving, at a gateway, a hash of a device public key of an loT device; sending, from the gateway to an authentication server, an initiating request including the hash of the device public key; receiving, at the gateway from the authentication server, an initiating response including the device public key and a first encrypted message encrypted using the device public key, the first encrypted message including a serial number corresponding to the loT device and a key nonce; broadcasting, from the gateway, a provisioning request, the provisioning request including the first encrypted message and a second encrypted message, the second encrypted message being encrypted using the device public key and including a local address of the loT device, the local address being generated by the gateway.

## Description

### CROSS-REFERENCE TO RELATED APPLICATION

This application claims the benefit of United States Provisional Patent Application No. 63/768,651 filed March 7, 2025, and the entire contents of United States Provisional Patent Application No. 63/768,651 are incorporated herein in their entirety.

### FIELD

The presently described systems and methods relate to secure communications with Internet-of-Things (IoT) devices, specifically, the secure provisioning of an loT device for configuring and onboarding the loT device onto an infrastructure.

### INTRODUCTION

loT devices are being increasingly utilized in modern technological infrastructures for connecting devices to networks to collect, exchange, and analyze data. Such devices are commonly used in home automation, industrial applications, healthcare settings, and more.

However, loT devices face limitations that may impact their security and operational lifespan. For instance, most loT devices operate with constrained resources. For example, some loT devices may be designed to operate using small batteries intended to last for years without replacement. As such, these devices may have limited power budget and may operate with limited computational capabilities.

Additionally, loT devices often communicate wirelessly, for example using radiofrequency (RF) signals. Such signals can be vulnerable to being intercepted as they are broadcast through the air, such as through man-in-the-middle (MITM) or in relay/replay attacks. Accordingly, security protocols that prevent unintended recipients from reading/modifying the contents of communicated signals can improve the overall security of loT device operation.

Traditional security protocols for communication between connected devices typically require relatively substantial computational resources, including handshakes, message exchanges, and cryptographic operations. As such, existing loT devices may quickly exceed their lifetime energy budget if required to execute such protocols. Consequently, most existing loT devices are not provisioned securely, opening them to potential security vulnerabilities.

### SUMMARY

In a broad aspect of this disclosure, a method for secure provisioning of an Internet of Things (IoT) device is provided. The method includes: receiving, at a gateway, a hash of a device public key of an loT device; sending, from the gateway to an authentication server, an initiating request including the hash of the device public key; receiving, at the gateway from the authentication server, an initiating response including the device public key and a first encrypted message encrypted using the device public key, the first encrypted message including a serial number corresponding to the loT device and a key nonce; broadcasting, from the gateway, a provisioning request, the provisioning request including the first encrypted message and a second encrypted message, the second encrypted message being encrypted using the device public key and including a local address of the loT device, the local address being generated by the gateway; receiving, at the gateway from the loT device, an encrypted acknowledgement message encrypted using a public key of the authentication server; sending, from the gateway to an authentication server, a verification message based on the acknowledgement message; and establishing an encrypted communication channel between the gateway and the loT device using a session key derived from the key nonce, the serial number, and/or the device public key.

Optionally, the method further includes: receiving, at the gateway, a primary key from the authentication server, the primary key being generated by the authentication server based on the key nonce, the serial number, and the device public key; generating, at the gateway, the session key from the primary key; receiving, at the gateway, a symmetrically encrypted communication from the loT device, the symmetrically encrypted communication being encrypted using the session key, wherein the session key is generated at the loT device independently from the generation of the session key at the gateway; and decoding, at the gateway, the symmetrically encrypted communication using the session key.

Optionally, the public key of the authentication server is pre-loaded onto the loT device at a time of manufacture.

Optionally, the session key is generated by using a hash function based at least on the serial number, the device public key, and the key nonce.

Optionally, the hash of the device public key is received at the gateway directly from the loT device.

Optionally, the hash of the device public key is received via an initialization communication from an intermediary device, the initialization communication triggered by scanning a QR code located at the loT device.

Optionally, the verification message includes the gateway identifier and is based on the encrypted acknowledgement message, wherein the encrypted acknowledgement message further includes the local address; and the method further includes receiving, at the gateway from the authentication server, a validation confirmation indicating completion of the secure provisioning for the loT device.

Optionally, the initiating response is generated by the authentication server by matching the hash of the device public key with an internal device record.

Optionally, the method further includes sending, at the gateway, a second symmetrically encrypted communication addressed to the local address upon establishing the secure communication channel.

Optionally, the loT device decrypts the second encrypted message using a private key corresponding to the device public key to obtain the local address.

Optionally, the second encrypted message contains a counter value; and the symmetric key is generated based, in part, on the counter value.

Optionally, the method further includes: sending, from the gateway to the loT device, a counter advance command, wherein the counter advance command causes the loT device to generate an updated counter value and generate an updated symmetric key based on the updated counter value; and receiving, at the gateway from the loT device, a new symmetrically encrypted message, the new symmetrically encrypted message being encrypted using the updated symmetric key.

In another broad aspect of this disclosure, a system for secure provisioning of an Internet of Things (IoT) device is provided. The system includes a gateway in communication with an loT device and an authentication server. The gateway is configured to: receive a hash of a device public key of the loT device; send, to the authentication server, an initiating request including the hash of the device public key; receive, from the authentication server, an initiating response including the device public key and a first encrypted message encrypted using the device public key, the first encrypted message including a serial number corresponding to the loT device and a key nonce; broadcast a provisioning request, the provisioning request including the first encrypted message and a second encrypted message, the second encrypted message being encrypted using the device public key and including a local address of the loT device, the local address being generated by the gateway; receive, from the loT device, an encrypted acknowledgement message encrypted using a public key of the authentication server; send, to an authentication server, a verification message based on the acknowledgement message; and establish an encrypted communication channel between the gateway and the loT device using a session key derived from the key nonce, the serial number, and/or the device public key.

Optionally, the gateway is further configured to: receive a primary key from the authentication server, the primary key being generated by the authentication server based on the key nonce, the serial number, and the device public key; generate the session key from the primary key; receive a symmetrically encrypted communication from the loT device, the symmetrically encrypted communication being encrypted using the session key, wherein the session key is generated at the loT device independently from the generation of the session key at the gateway; and decode the symmetrically encrypted communication using the session key.

Optionally, the public key of the authentication server is pre-loaded onto the loT device at a time of manufacture.

Optionally, the session key is generated by using a hash function based at least on the serial number, the device public key, and the key nonce.

Optionally, the hash of the device public key is received at the gateway directly from the loT device.

Optionally, the hash of the device public key is received via an initialization communication from an intermediary device, the initialization communication triggered by scanning a QR code located at the loT device.

Optionally, the verification message includes the gateway identifier and is based on the encrypted acknowledgement message, wherein the encrypted acknowledgement message further includes the local address; and the method further includes receiving, at the gateway from the authentication server, a validation confirmation indicating completion of the secure provisioning for the loT device.

Optionally, the initiating response is generated by the authentication server by matching the hash of the device public key with an internal device record.

Optionally, the gateway is further configured to send a second symmetrically encrypted communication addressed to the local address upon establishing the secure communication channel.

Optionally, the loT device decrypts the second encrypted message using a private key corresponding to the device public key to obtain the local address.

Optionally, the second encrypted message contains a counter value; and the symmetric key is generated based, in part, on the counter value.

Optionally, the gateway is further configured to: send, to the loT device, a counter advance command, wherein the counter advance command causes the loT device to generate an updated counter value and generate an updated symmetric key based on the updated counter value; and receive, from the loT device, a new symmetrically encrypted message, the new symmetrically encrypted message being encrypted using the updated symmetric key.

### DRAWINGS

For a better understanding of the embodiments described herein and to show more clearly how they may be carried out, reference will now be made, by way of example only, to the accompanying drawings which show at least one exemplary embodiment, and in which:
FIG. 1 is a schematic diagram of an example system for secure provisioning of an loT device;
FIG. 2 is a frame exchange diagram showing communication of frames within the system of FIG. 1 during an example provisioning process;
FIG. 3A is a schematic diagram of an example method of initiating the provisioning process;
FIG. 3B is a schematic diagram of another example method of initiating the provisioning process;
FIGS. 4A and 4B are schematic diagrams, of example communications during a loT device provisioning;
FIG. 5 is a block diagram of example session key derivation following provisioning; and
FIG. 6 is a flow chart of an example method for secure provisioning of IoT devices.

### DESCRIPTION OF VARIOUS EMBODIMENTS

It will be appreciated that, for simplicity and clarity of illustration, where considered appropriate, reference numerals may be repeated among the figures to indicate corresponding or analogous elements or steps. In addition, numerous specific details are set forth to provide a thorough understanding of the exemplary embodiments described herein. However, it will be understood by those of ordinary skill in the art that the embodiments described herein may be practiced without these specific details. In other instances, well-known methods, procedures and components have not been described in detail so as not to obscure the embodiments described herein. Furthermore, this description is not to be considered as limiting the scope of the embodiments described herein in any way but rather as merely describing the implementation of the various embodiments described herein.

In the description and drawings herein, reference may be made to a Cartesian co-ordinate system in which the vertical direction, or z-axis, extends in an up and down orientation from bottom to top. The x-axis extends in a first horizontal or width dimension perpendicular to the z-axis, and the y-axis extends cross-wise horizontally relative to the x-axis in a second horizontal or length dimension.

The terms "an embodiment," "embodiment," "embodiments," "the embodiment," "the embodiments," "one or more embodiments," "some embodiments," and "one embodiment" mean "one or more (but not all) embodiments of the present invention(s)," unless expressly specified otherwise.

The terms "including," "comprising" and variations thereof mean "including but not limited to," unless expressly specified otherwise. A listing of items does not imply that any or all of the items are mutually exclusive, unless expressly specified otherwise. The terms "a," "an" and "the" mean "one or more," unless expressly specified otherwise.

As used herein and in the claims, two or more parts are said to be "coupled", "connected", "attached", or "fastened" where the parts are joined or operate together either directly or indirectly (i.e., through one or more intermediate parts), so long as a link occurs. As used herein and in the claims, two or more parts are said to be "directly coupled", "directly connected", "directly attached", or "directly fastened" where the parts are connected in physical contact with each other. As used herein, two or more parts are said to be "rigidly coupled", "rigidly connected", "rigidly attached", or "rigidly fastened" where the parts are coupled so as to move as one while maintaining a constant orientation relative to each other. None of the terms "coupled", "connected", "attached", and "fastened" distinguish the manner in which two or more parts are joined together.

It should be noted that terms of degree such as "substantially", "about" and "approximately" when used herein mean a reasonable amount of deviation of the modified term such that the end result is not significantly changed. These terms of degree should be construed as including a deviation of the modified term if this deviation would not negate the meaning of the term it modifies.

In addition, as used herein, the wording "and/or" is intended to represent an inclusive-or. That is, "X and/or Y" is intended to mean X or Y or both, for example. As a further example, "X, Y, and/or Z" is intended to mean X or Y or Z or any combination thereof.

Further, although method steps may be described (in the disclosure and / or in the claims) in a sequential order, such methods may be configured to work in alternate orders. In other words, any sequence or order of steps that may be described does not necessarily indicate a requirement that the steps be performed in that order. The steps of methods described herein may be performed in any order that is practical. Further, some steps may be performed simultaneously.

As used herein and in the claims, a group of elements are said to "collectively" perform an act where that act is performed by any one of the elements in the group, or performed cooperatively by two or more (or all) elements in the group.

Some elements herein may be identified by a part number, which is composed of a base number followed by an alphabetical or subscript-numerical suffix (e.g. 112a, or 112₁). Multiple elements herein may be identified by part numbers that share a base number in common and that differ by their suffixes (e.g. 112₁, 112₂, and 112₃). All elements with a common base number may be referred to collectively or generically using the base number without a suffix (e.g. 112).

As described in the background, many existing loT devices are not provisioned securely due to constraints related to limited power budget and computational resources. Existing security protocols are not designed with the energy and computational constraints of loT devices in mind. As such, porting these protocols to loT devices can be difficult and may not be practically feasible. For example, some protocols may require the loT device to initiate the transaction to begin provisioning. In many cases, loT devices, by nature, are not meant to be able to initiate a transaction.

Additionally, commonly used secure provisioning methods may presuppose that the to-be-provisioned device can access the internet before provisioning in order to validate the authenticity of the entity initiating the provisioning process. For example, certificate-based provisioning can be used, in which the to-be-provisioned device needs to verify a cryptographic certificate binding the identity of the initiating device to a public key (e.g., X.509 certificates). However, in order to perform this, the device to be provisioned must be already capable of securely accessing the internet, before the provisioning protocol takes place. This is not the case for most loT devices as it would imply that the loT device is equipped with a Wi-Fi^{®} capable transceiver. IoT devices that are equipped with such hardware may exhibit significant reduction in their battery lifetime, as Wi-Fi^{®} capable transceivers generally consume a relatively significant amount of power to operate, thus defeating many of the desired objectives of the loT device (e.g., longevity, low maintenance, inexpensive, etc.).

In recent years, legal requirements have emerged in jurisdictions around the world mandating a minimum provable level of security during the device operational lifetime for IoT devices. As such, a secure device provisioning mechanism that requires only a fraction of the device's energy budget is required. Additionally, due to device constraints, the secure provisioning method should be executable in a reasonable amount of time.

As used herein, secure provisioning of an loT device refers to securely transferring to the loT device the data needed for operation of the loT device within a given deployment. The securely transferred data can include, for example, cryptographic key material, local/short address, and/or other operating parameters. The secure provisioning provided by the presently disclosed systems and methods may facilitate the establishment of a secure loT network that enforces confidentiality, data integrity, user data privacy and compliance with legal frameworks.

The presently described systems and methods may provide a low computational complexity means to establish a trusted relationship between an loT device and a network infrastructure it intends to communicate with. The methods described may enforce mutual authentication between the loT device and the infrastructure while preserving the integrity and confidentiality of the data exchanged between the infrastructure and the loT device. The system presently described exhibits a comparative very low energy requirement given that a small number of messages (as few as 2) are required to be sent between the loT device and the infrastructure to establish the secure channel.

Additionally, the presently disclosed systems and methods address the problem of assigning a local identity to an loT device within a network. Typically, networks devices are assigned a relatively long and universally unique address. This address is then repeated as a part of every message transmitted from the network device. The presently disclosed systems and methods provide a shorter addressing scheme that provides an in-network mapping of a long device unique identifier into a much shorter local identifier. Additionally, the presently described methods provide means to configure the loT device to communicate using the shorter local address, thus reducing the amount of data transferred and reducing power consumption.

Further, the presently disclosed systems and methods may be agnostic to the loT device's uplink mode of operation. Accordingly, the methods described may be suitable for use in loT devices utilizing backscatter communications as well as those utilizing active transmission communications.

The presently disclosed systems and methods may be used in short or long range backscatter applications. Long range backscatter may offer a different set of opportunities than close range backscatter technologies, such as in smart manufacturing or power grid technologies, where characteristics and security requirements are different. IoT devices used in backscatter systems may need to be vetted before being onboarded and added to a network. The presently described systems and methods may provide automated methods of performing this vetting and may provide end-to-end security protection for services involving ambient powered loT devices.

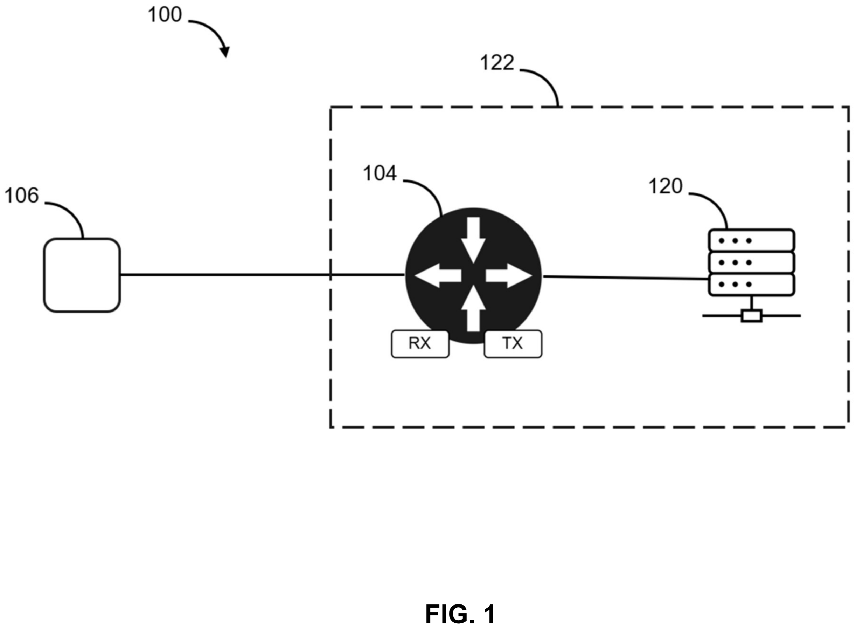

Reference is made to FIG. 1, which shows a system 100 for secure provisioning of an Internet of Things (IoT) device. System 100 includes an loT device 106 to be provisioned, a gateway 104, and an authentication server 120. loT device 106 may desire to communicate with infrastructure 122. Infrastructure 122 can be any network of systems and device with which the loT device may wish to communicate. For example, network 122 can include a local area network, a wide area network, or even the internet. Gateway 104 may be any node connected to network 122 that is configured to communicate with loT device 106 and facilitate the transfer of data from the loT device with other devices on the network. Gateway 104 can include hardware and software to receive signals from and transmit signals to wireless devices, including loT device 106. For example, gateway 104 can be a wireless access point connected to the internet and configured to communicate with loT device 106.

loT device 106 can be any device configured to communicate with gateway 104. loT device 106 may be capable of communicating with gateway 104 through wireless means, such as by sending and receiving RF signals. IoT device can contain hardware and software for communicating via RF signals. For example, the loT device can contain an RF frontend for receiving and processing incoming RF signals and for transmitting outgoing RF signals, and a processing unit for processing received signals and generating outgoing signals. For example, loT device 106 may be an loT device configured to send sensor information wirelessly to a receiver. IoT device 106 may be a low-power device with low energy budget (for example, 2 to 4 microwatts, 1 to 2 microwatts, etc.). For example, loT device 106 may be a battery powered device designed for extended use with minimal maintenance. In some embodiments, loT device 106 can be an ambient powered loT device capable of using energy harvesting techniques to power its operations. In any case, the loT device 106 may be energy-constrained and may not be practically capable of communicating through traditional protocols such as Wi-Fi^{®}.

In some embodiments, loT device 106 can communicate via RF backscatter. Any means of RF backscatter communication can be used, as is known in the art. For example, loT device 106 may be configured to communicate using Bluetooth^{®} backscatter. As another example, loT device 106 may be configured for backscatter communication using On-Off keying (OOK). In some embodiments, loT device 106 may be configured to receive an incoming RF signal, encode a payload onto the RF signal by XOR'ing the data bits of the originally transmitted payload, and backscatter the modified signal at a phase shifted frequency. In some embodiments, loT device 106 may communicate using techniques other than backscatter communication. For example, loT device 106 can communicate via active transmission, in which a new RF signal is generated at the loT device and data is encoded thereon for transmission.

Gateway 104 may be in communication with authentication server 120 through network 122. For example, gateway 104 may communicate with server 120 through the internet. Additionally, or alternatively, gateway 104 and server 120 can be located on the same local network and be connected via communications cables. In some embodiments, gateway 104 and server 120 can be collocated.

Authentication server 120 may authenticate the loT device 106 and provide cryptographic keys for establishing a secure communication channel between the loT device 106 and the network 122. Authentication server 120 can be any node in network 122 that hosts a shared secret with the loT device. The authentication server 120 can use the shared secrets to authenticate the loT device and generate the cryptographic keys for communication with the loT device.

Gateway 104 and server 120 may be in secure connection with one another. The gateway 104 and server 120 can be in secure communication in any way that preserves confidentiality and integrity of messages and ensures authenticity of the parties. For example, gateway 104 and server 120 may have used certificate-exchange based methods to verify the authenticity of the parties and may use symmetric encryption algorithms to communicate.

The authentication server 120 may host internal records containing the loT device's serial number and public key. The internal records may be updated out-of-band. For example, at the time the loT device is manufactured, the serial number and public key may be recorded. The serial number and public key may be provided to the authentication server, which may update its records to include the information.

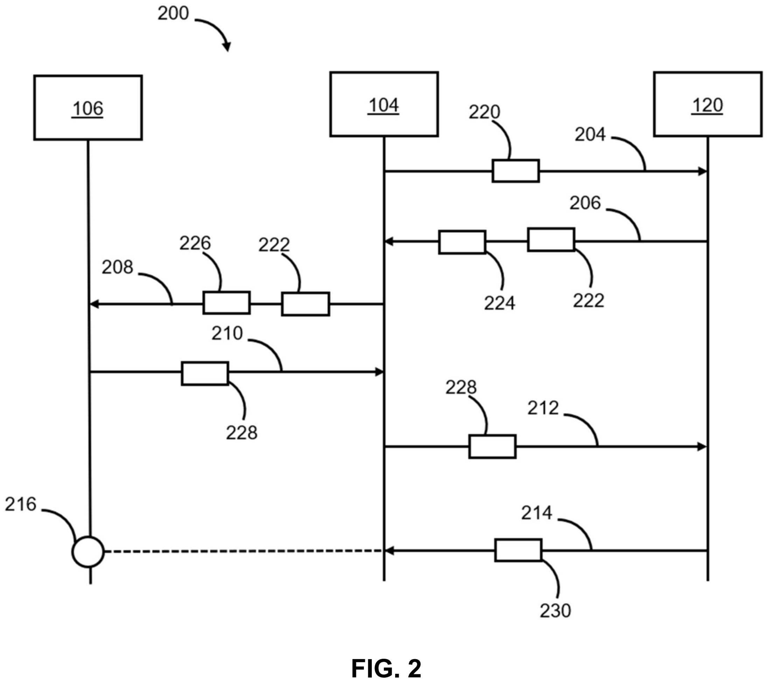

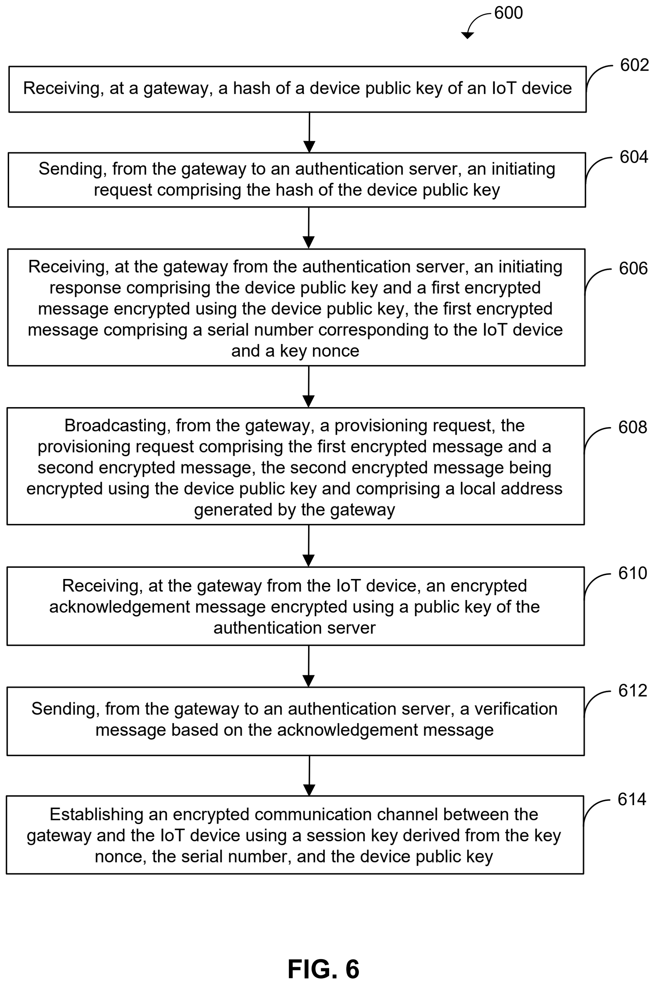

Reference is next made to FIG. 6, which shows a flow chart of an example method 600 for secure provisioning of IoT devices. Any suitable system may be used for implementing method 600. For example, system 100 of FIG. 1 may be used for implementing method 600. Reference is now additionally made to FIG. 2, which is a frame exchange diagram 200 showing communication of frames within system 100 during implementation of method 600.

At 602, the method 600 begins with receiving, at a gateway, a hash of a device public key of an loT device. The loT device is the loT device to be provisioned, such as loT device 106. The loT device may be in provisioning mode and may stay in provisioning mode until it has received a local address. The gateway may be a node on a network that the loT device wants to communicate with, such as gateway 104. The device public key may be a public key associated with the loT device. The device public key may be an asymmetric encryption key used to encrypt messages to the loT device. The loT device may hold a corresponding private key for decrypting the encrypted messages.

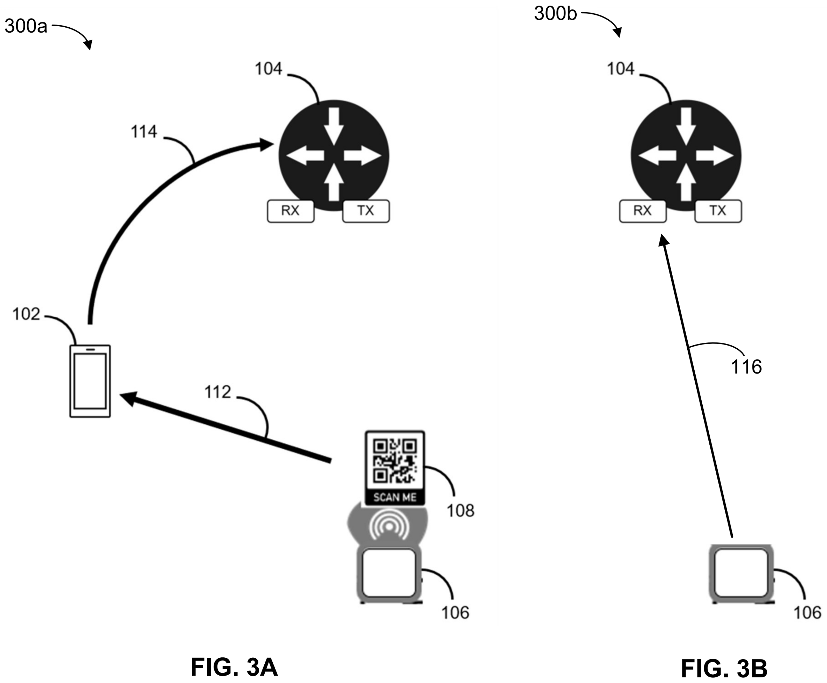

The hash of the device public key may be received directly from the loT device, or via an initialization communication from an intermediary device. The intermediary device may be a device capable of communicating with the gateway 104. For example, a traditional communication protocol may be used, such as Wi-Fi^{®} or Bluetooth^{®}. For example, the intermediary device can be a mobile phone containing a Wi-Fi^{®} radio configured to communicate with gateway 104 through the Wi-Fi^{®} protocol. Reference is made to FIG. 3A, which shows a schematic diagram of an example method 300a of obtaining the hash of the device public key of the loT device 106 at the gateway 104. In the illustrated embodiment, intermediary device 102 may be a mobile phone. Intermediary device 102 may be configured to obtain the hash of the device public key from the loT device 106 at 112 and send the hash of the device public key to gateway 104 at 114.

In one or more embodiments, the initialization communication may be triggered by scanning a QR code located at the loT device 106. For example, a QR code 108 may be provided physically on the loT device 106, which, when scanned, contains the hash of the device public key of the loT device 106. The intermediary device 102 may then contain instructions for sending the hash of the device public key to the gateway 104 after scanning the QR code 108. For example, intermediary device 102 may be a smartphone equipped with a smartphone application configured to scan the QR code 108 and automatically send the hash of the device public key to the gateway 104 in a data packet in transmission 114 for initiating the provisioning of the loT device 106.

In some embodiments, the loT device can send the hash of the device public key directly to the gateway. Reference is now made to FIG. 3B, which shows a schematic diagram of an example method 300b in which the loT device 106 sends the hash of the device public key (as indicated by reference numeral 116) directly to the gateway 104. The loT device 106 may use any suitable technique for directly sending the hash of the device public key to the gateway 104. For example, the loT device 106 may utilize any suitable cellular communication techniques (e.g., as defined by the 3rd Generation Partnership Project (3GPP)), Bluetooth^{®} backscatter, or Bluetooth^{®} active transmission for communication the hash of the device public key to the gateway 104. In some embodiments, the loT device 106 can be configured to continually and periodically broadcast Bluetooth^{®} Low Energy advertising packets containing the hash of the device public key, which the gateway 104 can receive.

The method 600 proceeds, at 604, with sending, from the gateway to an authentication server, an initiating request comprising the hash of the device public key. Reference is next made in conjunction with FIG. 2, which shows an example frame exchange between loT device 106, gateway 104, and authentication server 120, in accordance with some embodiments. Gateway 104 may send transmission 204 to authentication server 120 which may contain the hash of the device public key, 220. Additionally, transmission 204 can include a gateway identifier, which can be any identifier uniquely associated with the gateway 104 such that authentication server can distinguish gateway 104 from other network devices. Optionally, transmission 204 can include a nonce configured to change with each transmission, which may serve to prevent replay attacks. As an example, the gateway can send a Serial Number Request packet to the authentication server, which carries as a payload the gateway's own ID concatenated with the received hash of the device public key for the loT device and a nonce.

Once the hash of the device public key 220 is received, authentication server 120 can use the hash 220 to determine a serial number of the loT device with which the device public key 220 is associated. The authentication server 120 may have the serial number stored in an internal records database. The internal records database may contain entries corresponding to loT devices. For example, a record could exist for each loT device that may need to be provisioned at some point by the authentication server. Each record entry may correspond to one loT device and may contain a corresponding serial number. The record entry can also include information allowing the authentication to match the serial number with the hash of the device public key for the loT device. For example, the device public key itself may be stored on the authentication server 120, and the authentication server 120 may be configured to hash the device public key to check if the hashed result matches with the received hashed device public key, and, if so, to retrieve the matching serial number and the public key. Alternatively or additionally, the pre-hashed public key could be stored on the authentication server so as to avoid the authentication server having to re-run the hashing algorithm to check for matches.

The authentication server can further update its records to include the gateway identifier, allowing the gateway identifier to be associated with the loT device in its internal records.

The method proceeds at 606 with receiving, at the gateway from the authentication server, an initiating response comprising the device public key and a first encrypted message encrypted using the device public key, the first encrypted message comprising a serial number corresponding to the loT device and a key nonce. For example, as shown in FIG. 2, authentication server 120 can send a transmission 206 containing a first encrypted message 222 and the device public key 224. The authentication server may generate the initiating response by matching the hash of the device public key with an internal device record. For example, the authentication server can use the device public key retrieved from its' own internal records to generate the first encrypted message, which may include the serial number of the loT device 106. As the first encrypted message is encrypted using the loT device's public key, the serial number of the loT device continues to act as a secret only known by the authentication server and the loT device, despite passing through the gateway during the provisioning process.

The transmission 206 can include the device public key 224 in a form not encrypted by the device public key. This may allow the gateway to obtain the device public key for use in encrypting subsequent communications to the loT device, ensuring continued secure communication between the gateway and the loT device during the provisioning process. Additionally, the possession of the loT device's device public key may establish trust in the gateway from the loT device's point of view.

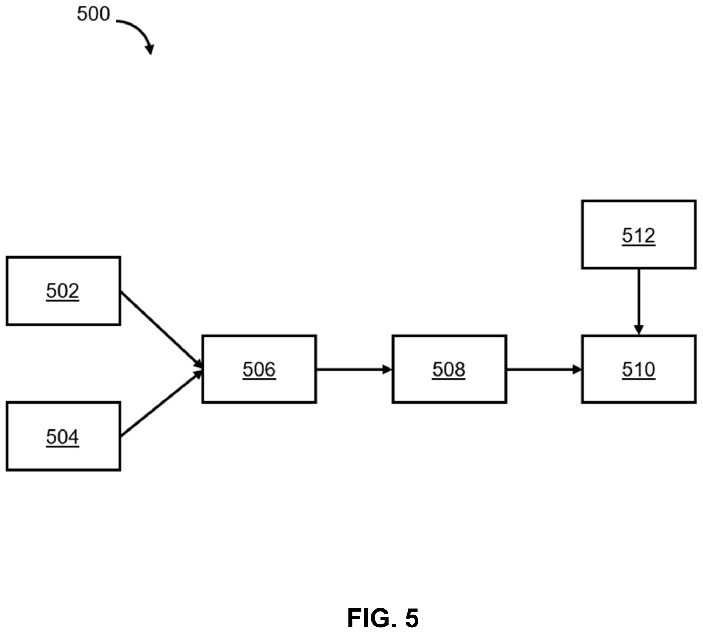

The first encrypted message 222 can contain a key nonce for use in generating session keys once provisioning has been completed. The key nonce can be a temporal key nonce used in generating temporal or primary keys as a part of the session key generating process, as will be described in more detail with reference to FIG. 5, below.

The method proceeds at 608 with broadcasting, from the gateway, a provisioning request, the provisioning request comprising the first encrypted message and a second encrypted message, the second encrypted message being encrypted using the device public key and comprising a local address generated by the gateway. For example, gateway 104 can send a provisioning request in transmission 208 containing the first encrypted message 222 as well as a second encrypted message 226, to the loT device 106. Transmission 208 may be a broadcast transmission to all devices as, at this point in the provisioning process, the loT device has not been allocated an address with which it can be addressed. The loT device may be in provisioning mode at this point and may be configured to listen to such broadcast messages as a part of the provisioning process. The first encrypted message and the second encrypted message can be encrypted with the device public key of the loT device 106. In this way, only loT device 106 may be able to read the contents of the transmission despite the transmission being received on multiple devices.

The first encrypted message 222 may be transmitted in a substantially unaltered state from authentication server 120 through gateway 104. As previously described, the first encrypted message can contain shared secrets between the authentication server 120 and the loT device, such as the serial number of the loT device 106 and a temporal key nonce.

The second encrypted message 226 can contain further information relevant to the provisioning process generated by the gateway. The second encrypted message 226 may include a local address, using which the loT device can be directly addressed by the gateway following completion of the provisioning. The local address can be significantly shorter than a unique identifier that may otherwise be used to identify the loT device, such as the loT device's serial number. As the address needs to be used in every transmission addressing the loT device 106, this reduction can result in the saving of computational resources and the reduction of transmission sizes.

In some embodiments, the loT device can decrypt the second encrypted message using a private key corresponding to the device public key to obtain the local address. For example, upon receiving the provisioning request in transmission 208, loT device can decrypt, using the device private key corresponding to the device public key, both the first and second encrypted messages to extract their contents. The first encrypted message may provide a serial number when decrypted. The second encrypted message may provide the local address generated by the gateway when decrypted. The loT device 106 can check whether the serial number received in the first encrypted message matches its' own serial number. For example, the loT device may check its' local memory, which may contain the serial number. If the serial number is a match, the loT device 106 may install the local address generated by the gateway, which was contained in the second encrypted message. The loT device 106 can then be configured to listen to messages containing the new address.

In some embodiments, the second encrypted message 226 can include a counter value. The counter value may be a counter preload value for preloading a value of a counter at the loT device 106 for the purpose of initializing the counter at a predetermined number. The counter may be used to generate session keys used for communication between the loT device 106 and the gateway 104 upon the completion of provisioning.

In some embodiments, the second encrypted message 226 can include a nonce. The nonce may assist with preventing relaying and replaying attacks. Additionally, the second encrypted message 226 can include the gateway identifier (i.e., the ID of gateway 104).

The method proceeds at 610 with receiving, at the gateway from the loT device, an encrypted acknowledgement message encrypted using a public key of the authentication server. For example, as shown in FIG. 2, IoT device 106 can send a transmission 210 containing an acknowledgement message to gateway 104 for the purposes of informing the gateway that the address has successfully been installed. The acknowledgement message can contain a third encrypted message 228. The third encrypted message 228 may be encrypted using a public key of the authentication server. Thus, the contents of the third encrypted message 228 may only be decoded and read by the holder of the corresponding private key (i.e., authentication server 120).

Third encrypted message 228 may include the local address of the loT device, the gateway identifier, and a nonce. In this way, the local address and the gateway identifier can only be read by the authentication server 120 to allow the authentication server 120 to update internal records to reflect that gateway 104 is associated with loT device 106.

In some embodiments, the public key of the authentication server may be pre-loaded onto the loT device at a time of manufacture. The loT device will then already know the public key of the authentication server without having to receive it over the air, which it may then use to asymmetrically encrypt communications to the authentication server.

The method proceeds at 612 with sending, from the gateway to an authentication server, a verification message based on the acknowledgement message. For example, gateway 104 can send a verification request transmission 212 to the authentication server 120 to verify the completion of the provisioning.

In some embodiments, the verification message can include the gateway identifier and the encrypted acknowledgement message. For example, transmission 212 can include the third encrypted message 228 and the ID of the gateway. In this way, the gateway identifier and the local address used by loT device 106 can be sent securely to the authentication server 120. Transmission 212 may also include a copy of the gateway identifier that is not encrypted using the public key of the authentication server.

In some embodiments, the method can further comprise receiving, at the gateway from the authentication server, a validation confirmation indicating completion of the secure provisioning for the loT device. For example, when the validation request message is received, the authentication server 120 can decrypt the third encrypted message using its' private key to obtain the local address, gateway identifier, and a nonce. The authentication server 120 can then validate that the received gateway identifier matches what was previously received from the gateway, for example, in previous transmission 204 by the gateway 104 to the authentication server 120. The authentication server may then update its internal records to associate the local address of the loT device with the gateway ID. Based on this, the authentication server 120 can then send a validation confirmation to the gateway 104 to confirm the validation.

The method proceeds at 614 with establishing an encrypted communication channel between the gateway and the loT device using a session key derived from the key nonce, the serial number, and/or the device public key. In some embodiments, the session key may be derived at least from the key nonce, the serial number and the device public key. Using at least all three pieces of information may provide improved security of the encrypted communication channel. Establishing the encrypted communication channel may entail establishing a cryptographic communication scheme to protect the contents of the transmitted messages between the gateway and the loT device. The encrypted communication channel may use symmetric encryption. For example, session keys to be used by symmetric cryptography algorithms can be generated based on one or more pieces of information exchanged during the provisioning process.

In some embodiments, asymmetric key encryption can be used, but it will be appreciated that symmetric key encryption may be advantageous from a power/compute usage perspective over asymmetric key encryption.

In some embodiments, the session keys can be generated using a hash function. Reference is made to FIG. 5, which shows a flowchart of an example process 500 for symmetric key generation. Process 500 can be used to generate symmetric session keys 510 for encrypting communications between the loT device 106 and gateway 104. One or more shared secrets can be used to generate the session keys 510. For example, the loT device serial number 502, which may be known only to the loT device 106 and the authentication server 120, can be used. A further piece of information, such as a public key 504, can also be used. Public key 504 may, in some embodiments, be the public key of the authentication server. In some embodiments, public key 504 may be the device public key of the loT device.

An intermediary key 506 can be generated using the public key 504 and the serial number 502 using a hash function. For example, a pseudo-random-key can be generated using the HKDF (Hash-based message authentication code Key Derivation Function) Extract function. The parameters of the HKDF-Extract function may include the serial number 502 and public key 504, as well as a salt. For example, an HKDF-Extract(salt, TAG_SN ∥ AS_pubk) function can be used, where TAG_SN represents the serial number 502 of the loT device and AS_pubk is the authentication server's public key (key 504).

A primary key 508 can then be computed using an HKDF-Expand function. The HKDF-Expand function can include, as input parameters, the intermediary key 506, the gateway identifier, the key nonce transferred in encrypted message 222 in transmission 204. For example, the HKDF-Expand function can be used in accordance with the following parameters: ${TK}_{1} = HKDF - Expand \left(PRK,GWID\left‖TK_NONCE\right‖\left.LOCAL_ADDR\right‖"TK1",16\right)$ Where TK₁ is the primary key, PRK is the intermediary key 506, GWID is the gateway identifier, TK_NONCE is the key none, and LOCAL_ADDR is the local address.

In some embodiments, multiple primary keys may be generated. For example, a second primary key can be generated using the HKDF-Expand function in accordance with the following parameters: ${TK}_{2} = HKDF - Expand \left(PRK,GWID\left‖TK_NONCE\right‖\left.LOCAL_ADDR\right‖"TK2",16\right) .$ where TK₂ is the second primary key.

In some embodiments, the method may include receiving, at the gateway, a primary key from the authentication server, the primary key being generated by the authentication server based on the key nonce, the serial number, and the device public key. For example, authentication server 120 may send a transmission 214 to gateway 104 containing the primary key 230. Transmission 214 may be an install key command, which instructs the gateway to install the primary key 230. The gateway can then generate a session key from the primary key. The session key can be generated based on a counter value. The counter value may begin at the counter preload value sent from the gateway 104 to the loT device 106 in transmission 208 in the second encrypted message 226. Using this counter pre-load value, a further HKDF-Expand function can be used to derive the session key in accordance with: ${Ekx}_{i} = HKDF - Expand \left(TKx,"CNTR",16\right)$

Wherein Ekx*ᵢ* is the session key corresponding to the xth primary key (TKx) generated at a counter value of *i,* and "CNTR" represents the counter value *i* as an input to the HDKF-Expand function.

In some embodiments, the method may include receiving, at the gateway from the loT device, a symmetrically encrypted communication, the symmetrically encrypted communication being encrypted using the session key, wherein the session key is independently generated at the loT device. The session keys may be, for example, session keys 510. loT device 106 may generate the session keys 510 independently from the gateway and authentication server. For example, at 216 of FIG. 2, the loT device 106 may generate the primary keys 508 using HKDF-Extract and HKDF-Expand algorithms as explained with reference to FIG. 5. The loT device 106 may use the same inputs and same counter values in the hashing algorithms to generate the same session key 510 as held by the gateway. In some embodiments, where there are multiple primary keys, the gateway may instruct the loT device on which primary key to use to generate the session key. For example, one key may be marked as a default key, and may be used until the loT device receives an instruction from the gateway to change to a different key. The loT device may be configured to listen for such an instruction addressed to its' local address, and may then switch to, for example, the next key in a sequence, to use as the primary key upon receiving the instruction.

In some embodiments, the method can further include sending, from the gateway to the loT device, a counter advance command, wherein the counter advance command causes the loT device to generate an updated counter value and generate an updated symmetric key based on the updated counter value. For example, due to security concerns, or as mandated by communication security standards, the session keys may have a limited lifetime. As such, the gateway 104 may, from time to time, determine that a session key currently in use should be changed for a new session key. In such a case, the gateway may instruct the loT device, for example using a re-key command, to advance the counter. Using the updated counter value, the primary key, and the HKDF-Expand algorithm described for generating the session key 510, the loT device and the gateway may both generate the next session key.

The gateway may then receive, from the loT device, a new symmetrically encrypted message, the new symmetrically encrypted message being encrypted using the updated symmetric key. As both the gateway and the loT device would have generated the updated symmetric key, the gateway can decrypt the updated encrypted message and extract its contents.

In some embodiments, the counters may start at zero instead of a pre-loaded value.

In some embodiments, the previous session key can be used as a seed for the new session key. For example, instead of simply generating a new session key using an updated counter value and the primary key, a new primary key can be generated altogether. For example, an HKDF-Extract function can be used, but with the previous session key as an input parameter, such as in the following example: HKDF-Extract(salt, TAG_SN ∥ AS_pubk ∥ EKxᵢ). The new primary keys may then be used to generate session keys for secure communication between the loT device and the gateway.

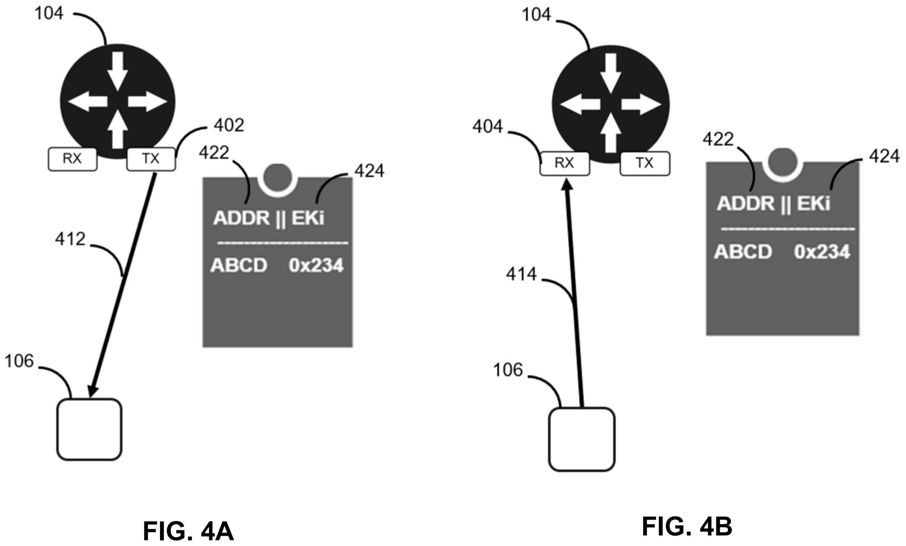

Reference is next made to FIGS. 4A and 4B, which show schematic diagrams illustrating example communications between loT device 106 and gateway 104. FIG. 4A shows the gateway sending, at a transmitter 402 of the gateway, a symmetrically encrypted communication 412 The communication 412 may be protected using session key 424. The communication 412 could be a request for a sensor reading data, addressed to local address 422 corresponding to the loT device 106. The loT device 106, now in normal operational mode following provisioning, may be listening to transmissions addressed to its installed local address. IoT device 106 may receive communication 412 addressed to its' local address and decrypt communication 412 using session key 424. IoT device 106 may then respond by sending a symmetrically encrypted communication 414 encrypted by session key 424 back to a receiver 404 of gateway 104. Communication 414 may contain a response to the sensor data request, which may contain the requested sensor data reading as a payload. The gateway 104 can then use session key 424 to decrypt communication 414 to obtain the requested sensor reading.

While the above description provides examples of the embodiments, it will be appreciated that some features and/or functions of the described embodiments are susceptible to modification without departing from the spirit and principles of operation of the described embodiments. Accordingly, what has been described above has been intended to be illustrative of the invention and non-limiting and it will be understood by persons skilled in the art that other variants and modifications may be made without departing from the scope of the invention as defined in the claims appended hereto. The scope of the claims should not be limited by the preferred embodiments and examples, but should be given the broadest interpretation consistent with the description as a whole.

### CLAUSES:

Clause 1: A method for secure provisioning of an Internet of Things (IoT) device, the method comprising: receiving, at a gateway, a hash of a device public key of an loT device; sending, from the gateway to an authentication server, an initiating request comprising the hash of the device public key; receiving, at the gateway from the authentication server, an initiating response comprising the device public key and a first encrypted message encrypted using the device public key, the first encrypted message comprising a serial number corresponding to the loT device and a key nonce; broadcasting, from the gateway, a provisioning request, the provisioning request comprising the first encrypted message and a second encrypted message, the second encrypted message being encrypted using the device public key and comprising a local address of the loT device, the local address being generated by the gateway; receiving, at the gateway from the loT device, an encrypted acknowledgement message encrypted using a public key of the authentication server; sending, from the gateway to an authentication server, a verification message based on the acknowledgement message; and establishing an encrypted communication channel between the gateway and the loT device using a session key derived from the key nonce, the serial number, and/or the device public key.
Clause 2: The method of any other clause, further comprising: receiving, at the gateway, a primary key from the authentication server, the primary key being generated by the authentication server based on the key nonce, the serial number, and the device public key; generating, at the gateway, the session key from the primary key; receiving, at the gateway, a symmetrically encrypted communication from the loT device, the symmetrically encrypted communication being encrypted using the session key, wherein the session key is generated at the loT device independently from the generation of the session key at the gateway; and decoding, at the gateway, the symmetrically encrypted communication using the session key.
Clause 3: The method of any other clause, wherein the public key of the authentication server is pre-loaded onto the loT device at a time of manufacture.
Clause 4: The method of any other clause, wherein the session key is generated by using a hash function based at least on the serial number, the device public key, and the key nonce.
Clause 5: The method of any other clause, wherein the hash of the device public key is received at the gateway directly from the loT device.
Clause 6: The method of any other clause, wherein the hash of the device public key is received via an initialization communication from an intermediary device, the initialization communication triggered by scanning a QR code located at the loT device.
Clause 7: The method of any other clause, wherein: the verification message comprises the gateway identifier and is based on the encrypted acknowledgement message, wherein the encrypted acknowledgement message further comprises the local address; and the method further comprises receiving, at the gateway from the authentication server, a validation confirmation indicating completion of the secure provisioning for the loT device.
Clause 8: The method of any other clause, wherein the initiating response is generated by the authentication server by matching the hash of the device public key with an internal device record.
Clause 9: The method of any other clause, further comprising sending, at the gateway, a second symmetrically encrypted communication addressed to the local address upon establishing the secure communication channel.
Clause 10: The method of any other clause, wherein the loT device decrypts the second encrypted message using a private key corresponding to the device public key to obtain the local address.
Clause 11: The method of any other clause, wherein: the second encrypted message contains a counter value; and the symmetric key is generated based, in part, on the counter value.
Clause 12: The method of any other clause, further comprising: sending, from the gateway to the loT device, a counter advance command, wherein the counter advance command causes the loT device to generate an updated counter value and generate an updated symmetric key based on the updated counter value; and receiving, at the gateway from the loT device, a new symmetrically encrypted message, the new symmetrically encrypted message being encrypted using the updated symmetric key.
Clause 13: A system for secure provisioning of an Internet of Things (IoT) device, the system comprising: a gateway in communication with an loT device and an authentication server, the gateway being configured to: receive a hash of a device public key of the loT device; send, to the authentication server, an initiating request comprising the hash of the device public key; receive, from the authentication server, an initiating response comprising the device public key and a first encrypted message encrypted using the device public key, the first encrypted message comprising a serial number corresponding to the loT device and a key nonce; broadcast a provisioning request, the provisioning request comprising the first encrypted message and a second encrypted message, the second encrypted message being encrypted using the device public key and comprising a local address of the loT device, the local address being generated by the gateway; receive, from the loT device, an encrypted acknowledgement message encrypted using a public key of the authentication server; send, to an authentication server, a verification message based on the acknowledgement message; and establish an encrypted communication channel between the gateway and the loT device using a session key derived from the key nonce, the serial number, and/or the device public key.
Clause 14: The system of any other clause, wherein the gateway is further configured to: receive a primary key from the authentication server, the primary key being generated by the authentication server based on the key nonce, the serial number, and the device public key; generate the session key from the primary key; receive a symmetrically encrypted communication from the loT device, the symmetrically encrypted communication being encrypted using the session key, wherein the session key is generated at the loT device independently from the generation of the session key at the gateway; and decode the symmetrically encrypted communication using the session key.
Clause 15: The system of any other clause, wherein the public key of the authentication server is pre-loaded onto the loT device at a time of manufacture.
Clause 16: The system of any other clause, wherein the session key is generated by using a hash function based at least on the serial number, the device public key, and the key nonce.
Clause 17: The system of any other clause, wherein the hash of the device public key is received at the gateway directly from the loT device.
Clause 18: The system of any other clause, wherein the hash of the device public key is received via an initialization communication from an intermediary device, the initialization communication triggered by scanning a QR code located at the loT device.
Clause 19: The system of any other clause, wherein: the verification message comprises the gateway identifier and is based on the encrypted acknowledgement message, wherein the encrypted acknowledgement message further comprises the local address; and the method further comprises receiving, at the gateway from the authentication server, a validation confirmation indicating completion of the secure provisioning for the loT device.
Clause 20: The system of any other clause, wherein the initiating response is generated by the authentication server by matching the hash of the device public key with an internal device record.
Clause 21: The system of any other clause, wherein the gateway is further configured to send a second symmetrically encrypted communication addressed to the local address upon establishing the secure communication channel.
Clause 22: The system of any other clause, wherein the loT device decrypts the second encrypted message using a private key corresponding to the device public key to obtain the local address.
Clause 23: The system of any other clause, wherein: the second encrypted message contains a counter value; and the symmetric key is generated based, in part, on the counter value.
Clause 24: The system of any other clause, wherein the gateway is further configured to: send, to the loT device, a counter advance command, wherein the counter advance command causes the loT device to generate an updated counter value and generate an updated symmetric key based on the updated counter value; and receive, from the loT device, a new symmetrically encrypted message, the new symmetrically encrypted message being encrypted using the updated symmetric key.

## Claims

1. A method for secure provisioning of an Internet of Things (IoT) device, the method comprising:
receiving, at a gateway, a hash of a device public key of an loT device;
sending, from the gateway to an authentication server, an initiating request comprising the hash of the device public key;
receiving, at the gateway from the authentication server, an initiating response comprising the device public key and a first encrypted message encrypted using the device public key, the first encrypted message comprising a serial number corresponding to the loT device and a key nonce;
broadcasting, from the gateway, a provisioning request, the provisioning request comprising the first encrypted message and a second encrypted message, the second encrypted message being encrypted using the device public key and comprising a local address of the loT device, the local address being generated by the gateway;
receiving, at the gateway from the loT device, an encrypted acknowledgement message encrypted using a public key of the authentication server;
sending, from the gateway to an authentication server, a verification message based on the acknowledgement message; and
establishing an encrypted communication channel between the gateway and the loT device using a session key derived from the key nonce, the serial number, and/or the device public key.

2. The method of claim 1, further comprising:
receiving, at the gateway, a primary key from the authentication server, the primary key being generated by the authentication server based on the key nonce, the serial number, and the device public key;
generating, at the gateway, the session key from the primary key;
receiving, at the gateway, a symmetrically encrypted communication from the loT device, the symmetrically encrypted communication being encrypted using the session key, wherein the session key is generated at the loT device independently from the generation of the session key at the gateway; and
decoding, at the gateway, the symmetrically encrypted communication using the session key.

3. The method of claim 1 or claim 2, wherein the public key of the authentication server is pre-loaded onto the loT device at a time of manufacture.

4. The method of any one of claims 1 to 3, wherein the session key is generated by using a hash function based at least on the serial number, the device public key, and the key nonce.

5. The method of any one of claims 1 to 4, wherein the hash of the device public key is received at the gateway directly from the loT device.

6. The method of any one of claims 1 to 4, wherein the hash of the device public key is received via an initialization communication from an intermediary device, the initialization communication triggered by scanning a QR code located at the loT device.

7. The method of any one of claims 1 to 6, wherein:
the verification message comprises the gateway identifier and is based on the encrypted acknowledgement message, wherein the encrypted acknowledgement message further comprises the local address; and
the method further comprises receiving, at the gateway from the authentication server, a validation confirmation indicating completion of the secure provisioning for the loT device.

8. The method of any one of claims 1 to 7, wherein the initiating response is generated by the authentication server by matching the hash of the device public key with an internal device record.

9. The method of claim 2, further comprising sending, at the gateway, a second symmetrically encrypted communication addressed to the local address upon establishing the secure communication channel.

10. The method of any one of claims 1 to 9, wherein the loT device decrypts the second encrypted message using a private key corresponding to the device public key to obtain the local address.

11. The method of claim 2, wherein:
the second encrypted message contains a counter value; and
the symmetric key is generated based, in part, on the counter value.

12. The method of claim 11, further comprising:
sending, from the gateway to the loT device, a counter advance command, wherein the counter advance command causes the loT device to generate an updated counter value and generate an updated symmetric key based on the updated counter value; and
receiving, at the gateway from the loT device, a new symmetrically encrypted message, the new symmetrically encrypted message being encrypted using the updated symmetric key.

13. A system for secure provisioning of an Internet of Things (IoT) device, the system comprising:
a gateway in communication with an loT device and an authentication server, the gateway being configured to perform the method according to any one of claims 1 to 12.
